# EUROPEAN PATENT APPLICATION

(11) **EP 4 794 445 A1**
(43) Date of publication of application: **19.08.2026**
(21) Application number: 23955202.9
(22) Date of filing: 13.10.2023
(51) Int. Cl.: H04W 76/28

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: RGTH
(86) International application number: PCT/CN2023/124569
(87) International publication number: WO 2025/076826

(57) **Abstract**

Provided are a wireless communication method, a terminal device, and a network device. The method comprises: a terminal device receives first indication information, the first indication information being used for activating or deactivating first DRX, and the first DRX being DRX associated with a network device; the terminal device determines an effective time of the first indication information on the basis of a first parameter configured by the network device and/or TA of the terminal device.

## Description

### TECHNICAL FIELD

This application relates to the field of communications technologies, and more specifically, to a wireless communication method, a terminal device, and a network device.

### BACKGROUND

A network device may activate or deactivate discontinuous reception (discontinuous reception, DRX) related to the network device, such as cell DRX or beam DRX, by transmitting indication information to a terminal device. How to properly determine an effective time of the indication information is a problem that is required to be solved.

### SUMMARY

This application provides a wireless communication method, a terminal device, and a network device. The following describes in detail the aspects related to this application.

According to a first aspect, a wireless communication method is provided, and includes: receiving, by a terminal device, first indication information, where the first indication information is used to activate or deactivate first DRX, and the first DRX is DRX associated with a network device; and determining, by the terminal device, an effective time of the first indication information based on a first parameter configured by the network device and/or timing advance (timing advance, TA) of the terminal device.

According to a second aspect, a wireless communication method is provided, and includes: transmitting, by a network device, first indication information to a terminal device, where the first indication information is used to activate or deactivate first DRX, and the first DRX is DRX associated with the network device, where an effective time of the first indication information is determined based on a first parameter configured by the network device.

According to a third aspect, a terminal device is provided, and includes: a communications module, configured to receive first indication information, where the first indication information is used to activate or deactivate first DRX, and the first DRX is DRX associated with a network device; and a determining module, configured to determine an effective time of the first indication information based on a first parameter configured by the network device and/or TA of the terminal device.

According to a fourth aspect, a network device is provided, and includes: a communications module, configured to transmit first indication information to a terminal device, where the first indication information is used to activate or deactivate first DRX, and the first DRX is DRX associated with the network device, where an effective time of the first indication information is determined based on a first parameter configured by the network device.

According to a fifth aspect, a terminal device is provided. The terminal device includes a memory and a processor, where the memory is configured to store a program, and the processor is configured to invoke the program in the memory to cause the terminal device to execute the method according to the first aspect.

According to a sixth aspect, a network device is provided. The network device includes a memory and a processor, where the memory is configured to store a program, and the processor is configured to invoke the program in the memory, to cause the network device to execute the method according to the second aspect.

According to a seventh aspect, an apparatus is provided. The apparatus includes a processor, configured to invoke a program from a memory, to cause the apparatus to execute the method according to any one of the first aspect and the second aspect.

According to an eighth aspect, a chip is provided. The chip includes a processor, configured to invoke a program from a memory, to cause a device on which the chip is installed to execute the method according to any one of the first aspect and the second aspect.

According to a ninth aspect, a computer-readable storage medium is provided, where the computer-readable storage medium stores a program, and the program causes a computer to execute the method according to any one of the first aspect and the second aspect.

According to a tenth aspect, a computer program product is provided. The computer program product includes a program, where the program causes a computer to execute the method according to any one of the first aspect and the second aspect.

According to an eleventh aspect, a computer program is provided. The computer program causes a computer to execute the method according to any one of the first aspect and the second aspect.

In embodiments of this application, when determining an effective time of first indication information (indication information for activating or deactivating DRX related to a network device), a parameter configured by the network device and/or TA of a terminal device are introduced, thereby helping make the determined effective time more proper.

### BRIEF DESCRIPTION OF DRAWINGS

FIG. 1A is an example diagram of a communication scenario to which an embodiment of this application is applicable.
FIG. 1B is an example diagram of another communication scenario to which an embodiment of this application is applicable.
FIG. 1C is an example diagram of still another communication scenario to which an embodiment of this application is applicable.
FIG. 2 is an example diagram of still another communication scenario to which an embodiment of this application is applicable.
FIG. 3 is an example diagram of still another communication scenario to which an embodiment of this application is applicable.
FIG. 4 is an example diagram of still another communication scenario to which an embodiment of this application is applicable.
FIG. 5A is an example diagram of a delay in arrival of an uplink signal at a network device.
FIG. 5B is another example diagram of a delay in arrival of an uplink signal at a network device.
FIG. 6A is an example diagram of a timing relationship in a non-terrestrial network.
FIG. 6B is another example diagram of a timing relationship in a non-terrestrial network.
FIG. 7 is a schematic diagram of an effective process of a cell DRX activation/deactivation indication.
FIG. 8 is a schematic flowchart of a wireless communication method according to an embodiment of this application.
FIG. 9 is a schematic flowchart of a wireless communication method according to another embodiment of this application.
FIG. 10 is a schematic flowchart of a wireless communication method according to still another embodiment of this application.
FIG. 11 is a schematic structural diagram of a terminal device according to an embodiment of this application.
FIG. 12 is a schematic structural diagram of a network device according to an embodiment of this application.
FIG. 13 is a schematic structural diagram of an apparatus to which an embodiment of this application is applicable.

### DESCRIPTION OF EMBODIMENTS

### Communications system architecture

The technical solutions in embodiments of this application may be applied to various communications systems, for example, a global system for mobile communications (global system of mobile communication, GSM), a code-division multiple access (code division multiple access, CDMA) system, a wideband code-division multiple access (wideband code division multiple access, WCDMA) system, general packet radio service (general packet radio service, GPRS), a long-term evolution (long term evolution, LTE) system, an advanced long-term evolution (advanced long term evolution, LTE-A) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (non-terrestrial network, NTN) system, a universal mobile telecommunications system (universal mobile telecommunication system, UMTS), a wireless local area network (wireless local area networks, WLAN), wireless fidelity (wireless fidelity, WiFi), a fifth-generation (5th-generation, 5G) system, or another communications system, for example, a future communications system such as a sixthgeneration mobile communications system or a satellite communications system.

Generally, a conventional communications system supports a limited quantity of connections, and is also easy to implement. However, with development of communication technologies, a mobile communications system not only supports conventional communication, but also supports, for example, device-to-device (device to device, D2D) communication, machine-to-machine (machine to machine, M2M) communication, machine type communication (machine type communication, MTC), vehicle-to-vehicle (vehicle to vehicle, V2V) communication, or vehicle-to-everything (vehicle to everything, V2X) communication. Embodiments of this application may also be applied to these communications systems.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to unlicensed spectrum, and the unlicensed spectrum may also be considered as shared spectrum. Alternatively, the communications system in embodiments of this application may be applied to licensed spectrum, and the licensed spectrum may also be considered as dedicated spectrum.

Embodiments of this application may be applied to an NTN system, or may be applied to a terrestrial communication network (terrestrial networks, TN) system. By way of example rather than limitation, the NTN system includes an NR-based NTN system and an IoT-based NTN system.

Embodiments of this application are described with reference to a network device and a terminal device. The terminal device may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, a user apparatus, or the like.

In embodiments of this application, the terminal device may be a station (STATION, ST) in a WLAN, may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (public land mobile network, PLMN), or the like.

The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to function as a base station. For example, the terminal device may function as a scheduling entity, which provides a sidelink signal between terminal devices in V2X, D2D, or the like. For example, a cellular phone and a vehicle communicate with each other through a sidelink signal. A cellular phone and a smart home device communicate with each other, without relaying a communication signal through a base station.

In embodiments of this application, the terminal device may be deployed on land, including being indoors or outdoors, may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home), or the like. The terminal device involved in embodiments of this application may also be referred to as a terminal, a user equipment (user equipment, UE), an access terminal device, a vehicle-mounted terminal, an industrial control terminal, a UE unit, a UE station, a mobile site, a mobile station, a remote station, a remote terminal device, a mobile device, a UE, a wireless communications device, a UE agent, a UE apparatus, or the like. The terminal device may also be stationary or mobile.

By way of example rather than limitation, in embodiments of this application, the terminal device may alternatively be a wearable device. The wearable device may also be referred to as a wearable intelligent device, and is a general term for wearable devices such as glasses, gloves, watches, clothes, and shoes that are intelligently designed and developed by applying wearable technologies to daily wearing. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a fullfeatured and large-sized device that can provide full or partial functions without relying on a smart phone, for example, a smart watch or smart glasses, and devices that focus on only a specific type of application function and need to cooperate with another device such as a smart phone for use, for example, various smart bracelets and smart jewelries for physical sign monitoring.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having the following names, such as a Node B (NodeB), an evolved NodeB (evolved NodeB, eNB), a next-generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home eNodeB, a network controller, an access node, a radio node, an access point (access piont, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move according to a location of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. In embodiments of this application, a scenario of the network device and the terminal device is not limited.

By way of example rather than limitation, in embodiments of this application, the network device may have a mobility characteristic. For example, the network device may be a mobile device. In some embodiments of this application, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments of this application, the network device may alternatively be a base station located on land, water, or the like.

In embodiments of this application, the network device may provide a service for a cell, and the terminal device communicates with the network device by using a transmission resource (for example, a frequency domain resource or a spectrum resource) used by the cell. The cell may be a cell corresponding to the network device (for example, a base station). The cell may belong to a macro base station or belong to a base station corresponding to a small cell (small cell). The small cell herein may include a metro cell (metro cell), a micro cell (micro cell), a pico cell (pico cell), a femto cell (femto cell), or the like. These small cells feature small coverage and low transmit power, and are suitable for providing a high-speed data transmission service.

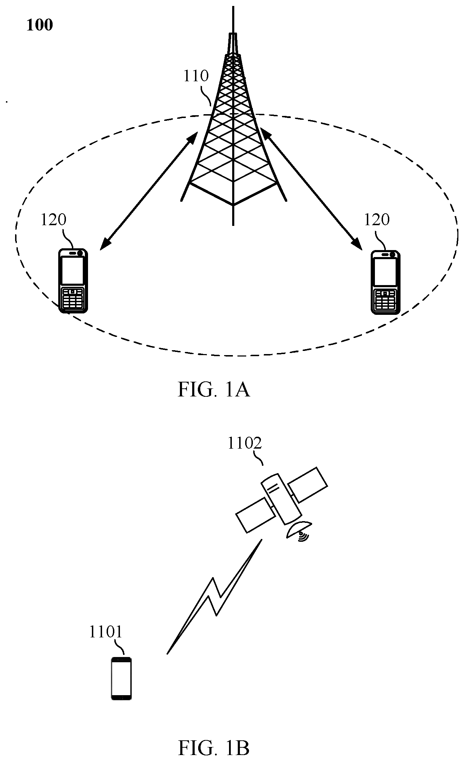

Exemplarily, FIG. 1A is a schematic diagram of an architecture of a communications system according to an embodiment of this application. As shown in FIG. 1A, the communications system 100 may include a network device 110, and the network device 110 may be a device that communicates with a terminal device 120 (or referred to as a communications terminal or a terminal). The network device 110 may provide communication coverage for a specific geographical area, and may communicate with a terminal device located within the coverage.

FIG. 1A exemplarily shows one network device and two terminal devices. In some embodiments of this application, the communications system 100 may include a plurality of network devices, and another quantity of terminal devices may be included within coverage of each network device, which is not limited in embodiments of this application.

Exemplarily, FIG. 1B is a schematic diagram of an architecture of another communications system according to an embodiment of this application. Referring to FIG. 1B, a terminal device 1101 and a satellite 1102 are included, and wireless communication may be performed between the terminal device 1101 and the satellite 1102. A network formed between the terminal device 1101 and the satellite 1102 may also be referred to as an NTN. In the architecture of the communications system shown in FIG. 1B, the satellite 1102 may have a function of a base station, and direct communication may be performed between the terminal device 1101 and the satellite 1102. Under this system architecture, the satellite 1102 may be referred to as a network device. In some embodiments of this application, the communications system may include a plurality of network devices 1102, and another quantity of terminal devices may be included within coverage of each network device 1102, which is not limited in embodiments of this application.

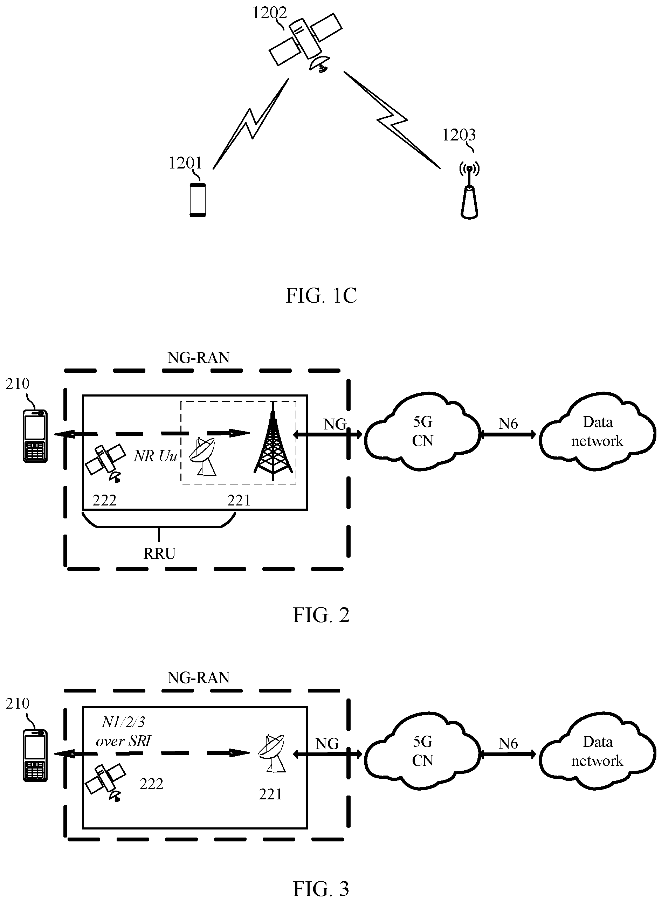

Exemplarily, FIG. 1C is a schematic diagram of an architecture of another communications system according to an embodiment of this application. Referring to FIG. 1C, a terminal device 1201, a satellite 1202, and a base station 1203 are included, wireless communication may be performed between the terminal device 1201 and the satellite 1202, and communication may be performed between the satellite 1202 and the base station 1203. A network formed between the terminal device 1201, the satellite 1202, and the base station 1203 may also be referred to as an NTN. In the architecture of the communications system shown in FIG. 1C, the satellite 1202 may not have a function of a base station, and communication between the terminal device 1201 and the base station 1203 is required to be performed through relaying using the satellite 1202. In the architecture of the system, the base station 1203 may be referred to as a network device. In some embodiments of this application, the communications system may include a plurality of network devices 1203, and another quantity of terminal devices may be included within coverage of each network device 1203, which is not limited in embodiments of this application.

It should be noted that FIG. 1A to FIG. 1C are merely examples of systems to which this application is applicable. Certainly, the methods shown in embodiments of this application may also be applied to another system, such as a 5G communications system or an LTE communications system. This is not specifically limited in embodiments of this application.

In some embodiments of this application, the wireless communications systems shown in FIG. 1A to FIG. 1C may further include another network entity such as a mobility management entity (mobility management entity, MME) or an access and mobility management function (access and mobility management function, AMF), which is not limited in embodiments of this application.

It should be understood that in embodiments of this application, a device having a communication function in a network or a system may be referred to as a communications device. The communications system 100 shown in FIG. 1A is used as an example. The communications device may include a network device 110 and a terminal device 120 that have a communication function. The network device 110 and the terminal device 120 may be the foregoing specific devices, and details are not described herein again. The communications device may further include another device in the communications system 100, such as a network controller or a mobility management entity. This is not limited in embodiments of this application.

It should be understood that, in embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

"Configured" in embodiments of this application may include being configured by using at least one of a system message, radio resource control (radio resource control, RRC) signalling, or a medium access control control element (media access control control element, MAC CE).

In some embodiments of this application, "predefined" or "preset" may be implemented by pre-storing corresponding codes, tables, or other forms that can be used to indicate related information in devices (for example, including a terminal device and a network device), and a specific implementation thereof is not limited in this application. For example, being predefined may refer to being defined in a protocol.

In some embodiments of this application, the "protocol" may refer to a standard protocol in the communication field, which may include, for example, an LTE protocol, an NR protocol, and a related protocol applied to a future communications system. This is not limited in this application.

Currently, the 3rd Generation Partnership Project (3rd generation partnership project, 3GPP) is currently researching NTN technologies. An NTN generally provides a terrestrial user with a communication service through satellite communication. Satellite communication has many unique advantages over terrestrial cellular network communication.

First, the satellite communication is not limited by a geographic location of a user. For example, a general terrestrial communication network cannot cover an area such as an ocean, a mountain, or a desert in which a network device cannot be set up. Alternatively, the terrestrial communication network does not cover some sparsely-populated areas. However, for the satellite communication, since one satellite may cover a relatively large terrestrial area, and the satellite may orbit the earth, theoretically, every corner of the earth may be covered by a satellite communication network.

Second, satellite communication has great social value. Satellite communication may cover remote mountainous areas, impoverished countries or regions at relatively low costs, thereby enabling people in these regions to enjoy advanced voice communication and mobile internet technologies. From this point of view, satellite communication is conducive to narrowing a digital divide with developed regions and promoting development of these regions.

Third, satellite communication has an advantage of long distance, and an increase in a communication distance does not significantly increase communication costs.

Finally, the satellite communication has high stability, and is not affected by natural disasters.

According to different orbital altitudes, communications satellites may be classified into a low Earth orbit (low earth orbit, LEO) satellite, a medium earth orbit (medium earth orbit, MEO) satellite, a geostationary earth orbit (geostationary earth orbit, GEO) satellite, a high elliptical orbit (high elliptical orbit, HEO) satellite, and the like. At this stage, the main study is on the LEO satellite and the GEO satellite.

An altitude of the LEO satellite generally ranges from 500 km to 1500 km. Correspondingly, an orbital period of the LEO satellite is about 1.5 hours to 2 hours. For the LEO satellite, a signal propagation delay of single-hop communication between users is generally less than 20 ms. A maximum satellite visible time of the LEO satellite is about 20 minutes. The LEO satellite has advantages of a short signal propagation distance, a small link loss, and a low transmit power requirement for a terminal device of a user.

An orbital altitude of the GEO satellite is 35786 km. A period for the GEO satellite to rotate around the earth is 24 hours. For the GEO satellite, a signal propagation delay of single-hop communication between users is generally about 250 ms.

To ensure satellite coverage and improve system capacity of an entire satellite communications system, the satellite generally uses a plurality of beams to cover a terrestrial area. Therefore, one satellite may generate dozens or even hundreds of beams to cover the terrestrial area. One beam of a satellite may cover a terrestrial area with a diameter of approximately tens to hundreds of kilometers.

Currently, an NTN system includes an NR-NTN system and an internet of things (internet of things, IoT)-NTN system.

Currently, 3GPP considers two types of satellites: one is a transparent payload (transparent payload) satellite, and the other is a regenerative payload (regenerative payload) satellite. With reference to FIG. 2 to FIG. 4, the following separately describes a network architecture including a transparent payload satellite and a network architecture including a regenerative payload satellite.

In the satellite network architecture shown in FIG. 2 to FIG. 4, the satellite network architecture may include a terminal device 210, a satellite node 222, and a terrestrial receiving station 221 ("terrestrial station" for short). There is wireless communication between the terminal device 210 and the satellite node 222, and the terminal device 210 may transmit data to the satellite node 222 over a link between the terminal device 210 and the satellite node 222. For example, the terminal device 210 may transmit data to the satellite node 222 over a service link (service link). Accordingly, after receiving the data, the satellite node 222 may transmit the data to the terrestrial receiving station 221 over a link between the satellite node 222 and the terrestrial receiving station 221. For example, the satellite node 222 may transmit the data to the terrestrial receiving station 221 over a radio link (for example, a feeder link (feeder link)). Accordingly, after receiving the data from the satellite node 222, the terrestrial receiving station 221 transmits the data to a core network (a data network), and further processes the data by using the core network, for example, performs data interaction with another terminal. It may be understood that the service link herein refers to the link between the terminal device 210 and the satellite node 222, and the feeder link refers to the link between the satellite node 222 and the terrestrial receiving station 221. In another possible embodiment, the link between the terminal device and the satellite node and/or the link between the satellite node and the terrestrial receiving station may also be represented by another term, which is not limited in this application.

The satellite node 222 may be classified into three types. A first type of satellite node is used only for forwarding, that is, having only a transparent payload function. In some implementations, such a satellite node may provide only one or more of a radio frequency filtering function, a frequency conversion function, or a power amplification function. For such a satellite node, a signal received from a terminal device is amplified and then transmitted to the terrestrial receiving station. No processing is performed at the satellite node, as shown in FIG. 2. The terminal device may communicate with the satellite node by using an NR-Uu interface, the satellite node may communicate with the terrestrial receiving station (for example, may include an NTN remote radio unit (Remote Radio Unit, RRU) and a gNB) by using an NR-Uu interface, the terrestrial receiving station may communicate with a 5G core network (5G CN) by using an N1, N2, or N3 interface, and the 5G CN may communicate with a data network by using an N6 interface.

A second type of satellite node has a complete processing function of a base station. For a terrestrial terminal device, the satellite node is a base station, and communication between the satellite node and the terminal device is basically consistent with normal 5G communication, as shown in FIG. 3. In some implementations, such a satellite node may further provide one or more of the following functions: a demodulation function, a decoding function, a routing function, a conversion function, an encoding function, or a modulation function. The terminal device may communicate with the satellite node by using an NR-Uu interface. The satellite node may communicate with the terrestrial receiving station by using a satellite radio interface (satellite radio interface, SRI). The SRI interface may be used to transmit an interface message (for example, an N2/N3 interface message) between the satellite node and a 5G CN. The terrestrial receiving station may communicate with the 5G CN by using an N1, N2, or N3 interface, and the 5G CN may communicate with a data network by using an N6 interface.

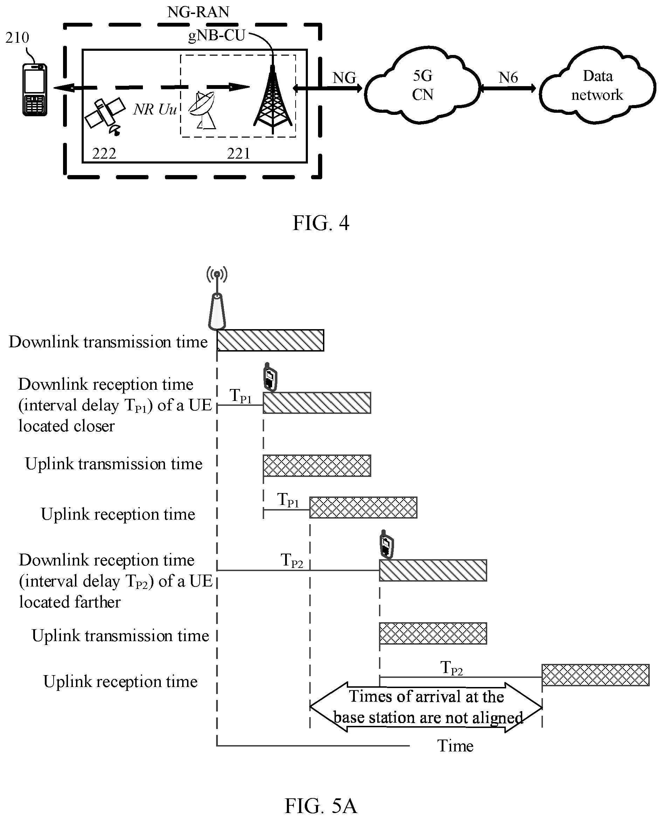

A third type of satellite node has a DU processing function. The satellite node is a DU for a terrestrial terminal device. Communication between the satellite node and the terminal device is substantially the same as communication between a terminal device and a DU in a normal 5G terrestrial communications system, as shown in FIG. 4. The terminal device may communicate with the satellite node by using an NR-Uu interface. The satellite node may communicate with a terrestrial receiving station (for example, may include a gNB-CU) by using an SRI interface. The SRI interface may be used for transmitting an F1 interface message between the satellite and the terrestrial receiving station. The terrestrial receiving station may communicate with a 5G CN by using an N1, N2, or N3 interface. The 5G CN may communicate with a data network by using an N6 interface.

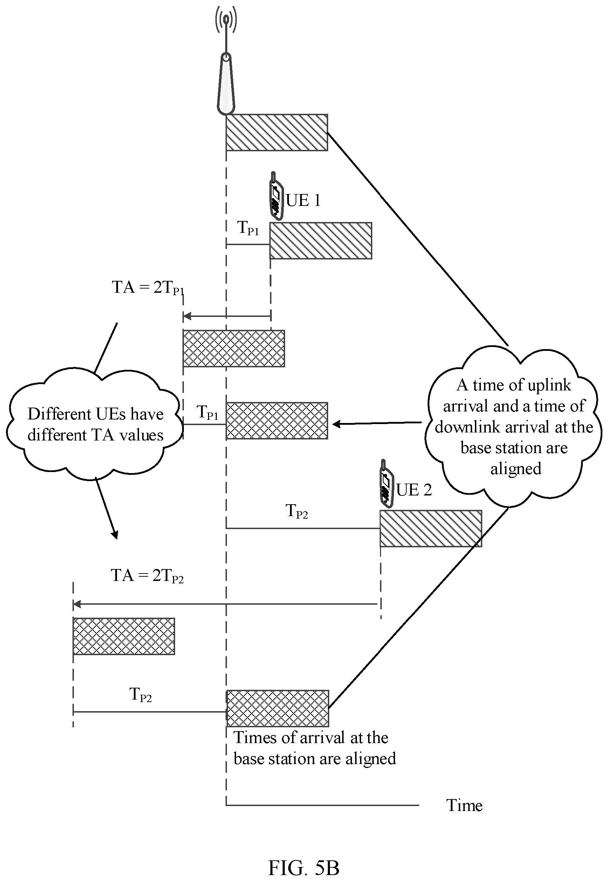

FIG. 5A and FIG. 5B respectively show a delay in arrival of an uplink signal at a network device in a case that there is no TA and a delay in arrival of an uplink signal at a network device in a case that there is TA. As shown in FIG. 5A, in a case that there is no TA, uplink signals transmitted by different terminal devices (for example, terminal devices located at different distances from the network device) arrive at the network device at different time, which may result in intra-cell interference. After the TA is introduced, referring to FIG. 5B, different terminal devices are configured with different uplink TA quantities, so that uplink signals transmitted by different terminal devices arrive at the network device at a same time, thereby facilitating avoiding intra-cell interference. For example, different terminal devices shown in FIG. 5B are respectively a terminal device 1 and a terminal device 2. If the terminal device 1 and the terminal device 2 receive a downlink signal and transmit an uplink signal in synchronization with each other, uplink signals transmitted by the terminal device 1 and the terminal device 2 are respectively offset from the network device by 2Tₚ₁ and 2Tₚ₂, thereby ensuring that the uplink signals from the terminal device 1 and the terminal device 2 arrive at the network device at a same time. In other words, if the terminal device 1 and the terminal device 2 receive a downlink signal and transmit an uplink signal in synchronization with each other, TA quantities corresponding to the terminal device 1 and the terminal device 2 are respectively 2Tₚ₁ and 2Tₚ₂, thereby ensuring that the uplink signals from the terminal device 1 and the terminal device 2 arrive at the network device at a same time.

The network device may determine a TA value of each terminal device by measuring uplink transmission of the terminal device. The network device may transmit a TA command to the terminal device to notify the terminal device of a TA value corresponding to the terminal device. For example, the network device may transmit the TA command to the terminal device in two manners, which are specifically as follows.

Manner 1: Acquisition of initial TA: The terminal device may implement initial uplink synchronization through a random access procedure. In the random access procedure, the network device may determine a TA value by measuring a received preamble (preamble), and transmit the TA value to the terminal device by using a TA command (timing advance command, TAC) field of a random access response (random access response, RAR) message. For example, the network device may carry a 12-bit TAC in the RAR message, to indicate the initial TA to the terminal device.

Manner 2: Adjustment of a radio resource control (radio resource control, RRC) connected state TA: Although in a random access procedure, the terminal device achieves uplink synchronization with the network device, timing when an uplink signal arrives at the network device may change with time. Therefore, the terminal device is required to continuously update an uplink TA quantity of the terminal device to maintain uplink synchronization. If TA of a terminal device is required to be corrected, the network device may transmit a TA command to the terminal device to request the terminal device to adjust uplink timing. In some implementations, the TA command is transmitted by the network device to the terminal device by using a medium access control control element (media access control control element, MAC CE). This MAC CE may also be referred to as a TA command MAC CE (namely, a MAC CE that carries a TA command). In other words, when the terminal device is in an RRC connected state, the terminal device may adjust uplink transmission based on the MAC CE that carries the TA command.

In a CA scenario, the terminal device may be required to use different TA values for different uplink carriers. Therefore, a timing advance group (timing advance group, TAG) is introduced in standards. The network device may configure a maximum of four TAGs for each cell group (cell group) of the terminal device, and for each serving cell, configure a TAG associated with the service group. In some implementations, the terminal device may maintain TA for each TAG.

In a terrestrial communications system, a propagation delay of signal communication is generally less than 1 ms. In an NTN system, because a communication distance between a terminal device and a satellite (or a network device) is very long, a propagation delay of signal communication is very long. For example, the propagation delay may range from tens of milliseconds to hundreds of milliseconds. A specific propagation delay is related to a satellite orbital height and a service type of satellite communication. To process the relatively large propagation delay, a timing relationship of the NTN system is required to be enhanced relative to that of an NR system.

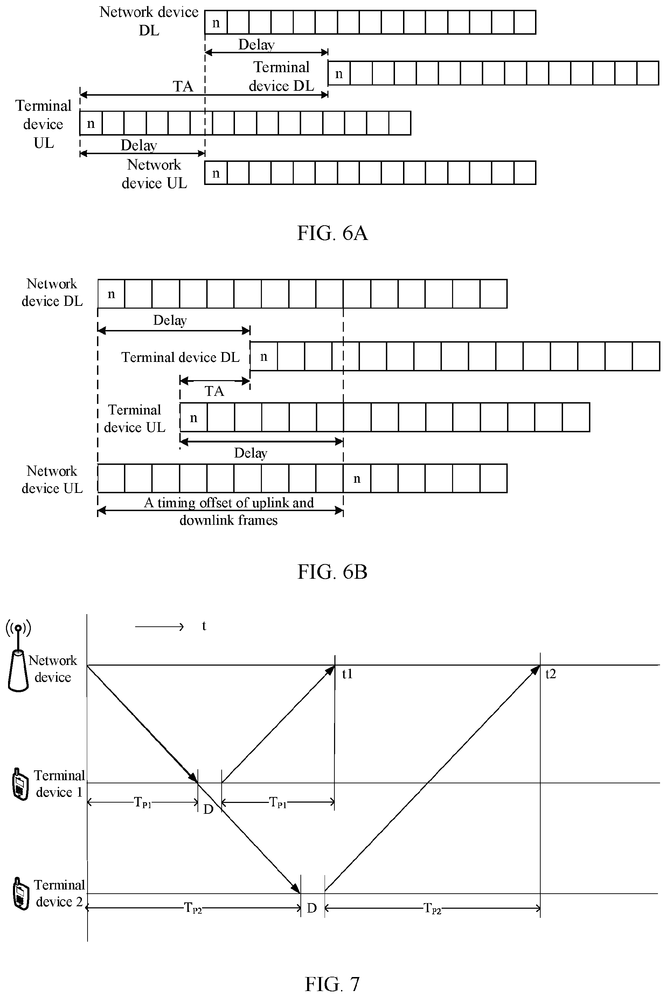

As in the NR system, in the NTN system, an impact of TA is also required to be considered when the terminal device performs uplink transmission. Because the propagation delay in the NTN system is relatively large, a range of TA values is also relatively large. When the terminal device is scheduled to perform uplink transmission in a slot n, the terminal device may determine an uplink transmission occasion (for example, transmission in advance during uplink transmission) based on a round-trip propagation delay, so that a signal arrives at a base station side within an uplink slot n on the base station side. The timing relationship in the NTN system may be classified into two cases, which are shown in FIG. 6A and FIG. 6B below, respectively.

In one case, as in the NR system, a downlink slot and an uplink slot that are on a base station side in the NTN system are aligned (a slot n shown in FIG. 6A). In this case, to align uplink transmission of the terminal device with uplink and downlink slots on the base station side, the terminal device is required to use a relatively large TA value. During uplink transmission, a relatively large offset value, such as K_{offset}, is also required to be introduced.

In another case, unlike in the NR system, there is an offset value (a timing offset of uplink and downlink frames shown in FIG. 6B) between the downlink slot and the uplink slot on the base station side. In this case, if the uplink transmission of the terminal device is expected to be aligned with the uplink slot on the base station side, the terminal device is required to use only a small TA value. However, in this case, the base station may require additional scheduling complexity to process a corresponding scheduling timing sequence.

To ensure communication quality, a timing sequence relationship in an NR system is defined in a related technology. The following describes a physical downlink shared channel (physical downlink shared channel, PDSCH) receiving timing sequence, a physical uplink shared channel (physical uplink shared channel, PUSCH) transmission timing sequence, a hybrid automatic repeat request-acknowledgement (hybrid automatic repeat request-ACKnowledgement, HARQ-ACK) transmission timing sequence, a medium access control control element (media access control control element, MAC CE) activation timing sequence, a channel state information (channel state information, CSI) transmission timing sequence, a CSI reference resource timing sequence, and an aperiodic sounding reference signal (sounding reference signal, SRS) transmission timing sequence.

The PDSCH receiving timing sequence is as follows: When a UE is scheduled by downlink control information (downlink control information, DCI) to receive a PDSCH, the DCI includes indication information of *K*₀, and *K*₀ is used to determine a slot for transmitting the PDSCH. For example, if the scheduling DCI is received in a slot *n*, a slot allocated for transmitting the PDSCH is a slot $\left⌊n⋅\frac{{2}^{{μ}_{PDSCH}}}{{2}^{{μ}_{PDCCH}}}\right⌋ + {K}_{0}$, where *K*₀ is determined based on a subcarrier spacing of the PDSCH, *µ_{PDSCH}* and *µ_{PDSCH}* are respectively used to determine subcarrier spacings configured for the PDSCH and a physical downlink control channel (physical downlink control channel, PDCCH). A value of *K*₀ ranges from 0 to 32.

A PUSCH transmission timing sequence based on DCI scheduling is as follows: When a UE is scheduled by DCI to transmit a PUSCH, the DCI includes indication information of *K*₂, and *K*₂ is used to determine a slot for transmitting the PUSCH. For example, if the scheduling DCI is received in a slot *n*, a slot allocated for transmitting the PUSCH is a slot $\left⌊n⋅\frac{{2}^{{μ}_{PUSCH}}}{{2}^{{μ}_{PDCCH}}}\right⌋ + {K}_{2}$, where *K*₂ is determined based on a subcarrier spacing of the PDSCH, *µ_{PDSCH}* and *µ_{PDSCH}* are respectively used to determine subcarrier spacings configured for the PUSCH and a PDCCH. A value of *K*₂ ranges from 0 to 32.

A PUSCH transmission timing sequence based on RAR grant (grant) scheduling is as follows: For a slot in which PUSCH transmission is scheduled by an RAR grant, if an end location of a PDSCH that is received by a UE and that includes a corresponding RAR grant message is in a slot n after the UE initiates PRACH transmission, the UE transmits the PUSCH in a slot n + *K*₂ *+ Δ,* where *K*₂ and Δ are agreed upon by a protocol.

A transmission timing sequence for transmitting HARQ-ACK on a PUCCH is as follows: For a slot for transmitting a PUCCH, if an end location of reception of a PDSCH is in a slot *n* or an end location of reception of a PDCCH indicating release of a semi-persistent scheduling (Semi-Persistent Scheduling, SPS) PDSCH is in a slot *n*, a UE shall transmit corresponding HARQ-ACK information on a PUCCH resource in a slot *n* + *K*₁, where *K*₁ denotes a quantity of slots and is indicated by using an information field PDSCH-to-HARQ-timingindicator in a DCI format, or is provided by using a parameter dl-DataToUL-ACK. *K*₁ = 0 corresponds to a case in which the last slot for PUCCH transmission overlaps a slot of PDCCH reception, either for receiving a PDSCH or for indicating release of an SPS PDSCH.

The MAC CE activation timing sequence is as follows: When HARQ-ACK information corresponding to a PDSCH that includes a MAC CE command is transmitted in a slot n, a corresponding behavior indicated by the MAC CE command and downlink configuration assumed by a UE shall take effect from the 1^{st} slot after a slot $n + 3 {N}_{slot}^{subframe , μ}$, where ${N}_{slot}^{subframe , μ}$ indicates a quantity of slots included in each subframe in a subcarrier spacing configuration *µ*.

A CSI transmission timing sequence on a PUSCH is as follows: The CSI transmission timing sequence on a PUSCH is the same as a transmission timing sequence for PUSCH transmission generally scheduled by DCI.

The CSI reference resource timing sequence is as follows: CSI reference resources for reporting CSI in an uplink slot *n'* are determined based on a single downlink slot *n - n_{CSI_ref}*, where $n = \left⌊n′⋅\frac{{2}^{{μ}_{DL}}}{{2}^{{μ}_{UL}}}\right⌋$, and *µ_{DL}* and *µ_{UL}* are respectively a downlink subcarrier spacing configuration and an uplink subcarrier spacing configuration. A value of *n_{CSI_ref}* depends on a type of CSI reporting.

The aperiodic SRS transmission timing sequence is as follows: If a UE receives, in a slot n, DCI triggering transmission of aperiodic SRS, the UE transmits the aperiodic SRS in each triggered SRS resource set in a slot $\left⌊n⋅{2}^{\frac{{μ}_{SRS}}{{μ}_{PDCCH}}}\right⌋ + k$. where k is configured by using a higher layer parameter slotOffset in each triggered SRS resource set, and is determined based on a subcarrier spacing corresponding to triggered SRS transmission, and *µ_{SRS}* and *µ_{PDCCH}* are respectively a subcarrier spacing configuration for the triggered SRS transmission and a subcarrier spacing configuration of a PDCCH that carries a triggering command.

The following describes a timing sequence enhancement manner of an NTN system.

A PDSCH receiving timing sequence in the NR system is only affected by a downlink receiving timing sequence, and is not affected by a large transmission round-trip delay in the NTN system. Therefore, the PDSCH receiving timing sequence in the NR system may be reused in the NTN system.

For other timing sequences affected by interaction between downlink reception and uplink transmission, in order to work normally in the NTN system, or to overcome a large transmission delay in the NTN system, a timing sequence relationship is required to be enhanced. A simple solution is to introduce an offset parameter *K_{offset}* into the system and apply the parameter to a related timing sequence relationship. The following describes how to use the offset parameter.

A PUSCH (including CSI transmitted on the PUSCH) transmission timing sequence based on DCI scheduling is as follows: If the scheduling DCI is received in a slot n, a slot allocated for PUSCH transmission is a slot $\left⌊n⋅\frac{{2}^{{μ}_{PUSCH}}}{{2}^{{μ}_{PDCCH}}}\right⌋ + {K}_{2} + {K}_{offset}$.

A PUSCH transmission timing sequence based on RAR grant scheduling is as follows: For a slot in which PUSCH transmission is scheduled by RAR grant, a UE transmits the PUSCH in a slot *n* + *K*₂ + Δ *+ K_{offset}.*

A transmission timing sequence for transmitting HARQ-ACK on a PUCCH is as follows: For a slot for transmitting a PUCCH, a UE shall transmit corresponding HARQ-ACK information on a PUCCH resource in a slot *n + K*₁ *+ K_{offset}.*

A MAC CE activation timing sequence: When HARQ-ACK information corresponding to a PDSCH that includes a MAC CE command is transmitted in a slot n, a corresponding behavior indicated by the MAC CE command and downlink configuration assumed by a UE shall take effect from the 1^{st} slot after a slot $n + {XN}_{slot}^{subframe , μ} + {K}_{offset}$, where *X* may be determined by a UE capability in NTN, and a value may not be 3.

A CSI reference resource timing sequence is as follows: CSI reference resources for reporting CSI in an uplink slot *n'* are determined based on a single downlink slot *n* - *n_{CSI_{ref}} - K_{offset}.*

The aperiodic SRS transmission timing sequence is as follows: If a UE receives, in a slot n, DCI triggering transmission of aperiodic SRS, the UE transmits the aperiodic SRS in each triggered SRS resource set in a slot $\left⌊n⋅{2}^{\frac{{μ}_{SRS}}{{μ}_{PDCCH}}}\right⌋ + k + {K}_{offset}$.

In the network energy saving (network energy saving, NES) project of 3rd Generation Partnership Project (3rd generation partnership project, 3GPP) Release 18 (release 18, R18), a cell discontinuous transmission (discontinuous transmission, DTX)/DRX mechanism is introduced. The DTX/DRX mechanism mainly achieves the purpose of network energy saving by reducing transmission/reception time of a network device in time domain. A basic principle of the DTX/DRX mechanism is as follows: For a serving cell of a terminal device, the network device may configure a periodic cell DTX/DRX pattern (pattern) for the terminal device. The cell DTX/DRX pattern may be used to determine an active time period and an inactive time period of cell DTX/DRX. Configuration of the cell DTX/DRX pattern is identical for all terminal devices within a cell. The cell DTX pattern and the cell DRX pattern may be configured and activated separately. For a cell in which cell DTX is configured and activated, a terminal device does not monitor a PDCCH in a specific case (for example, a PDCCH indicating scheduling of an initial transmission) and does not receive semi-persistent scheduling (semi-persistent scheduling, SPS) during the inactive time period of the cell DTX. For a cell in which cell DRX is configured and activated, a terminal device transmits no configured grant (configured grant, CG) or scheduling request (scheduling request, SR) during the inactive time period of the cell DRX. Related features of the cell DTX/DRX are generally applied only to a terminal device in an RRC connected state, and the introduction of the related features of the cell DTX/DRX generally does not affect a random access procedure in the cell, transmission of synchronization signal blocks (synchronization signal block, SSB), paging, or system message broadcasting. The cell DTX/DRX may be activated or deactivated by using RRC signalling or layer 1 (layer 1, L1) group common signalling.

The cell DTX/DRX may be configured based on parameters such as an active time period and a cycle. During the active time period, a terminal device monitors or receives a PDCCH and SPS, and transmits an SR and a CG. Correspondingly, during the active time period, the network device transmits a PDCCH and SPS, and receives an SR and a CG. The cycle of the cell DTX/DRX refers to a period in which the active time period occurs. For a given cell, if both the cell DTX and the cell DRX are configured, active time periods and cycles of the cell DTX and the cell DRX may be configured using a same parameter.

Once the network device identifies the presence of an emergency call or public safetyrelated service, the network device is required to ensure that the cell DTX or the cell DRX does not affect such services (for example, the network device may first release or deactivate the cell DTX/DRX configuration). The network device is further required to ensure that, on-duration (on-duration) of connected discontinuous reception (connected discontinuous reception, C-DRX) of a terminal device in the connected state and the active time period of the cell DTX/DRX at least partially overlap in time. In other words, an integer-multiple relationship is typically satisfied between a C-DRX cycle of the terminal device and the cycle of the cell DTX/DRX.

As described above, the cell DTX/DRX pattern may be configured by using RRC signalling, and may be activated/deactivated by using a PDCCH. Currently, after a specific delay following reception of a PDCCH indicating activation/deactivation of the cell DTX/DRX, the terminal device considers that the cell DTX/DRX activation/deactivation indication takes effect, where the delay may be understood as a period of time required by the terminal device to process the PDCCH.

For example, for the cell DTX, if the terminal device receives, in a downlink slot n (DL slot n), a PDCCH indicating activation/deactivation of the cell DTX, the terminal device considers that the cell DTX activation/deactivation indication takes effect at a 1^{st} downlink slot whose starting time point is not earlier than (that is, equal to or later than) a starting time point of a downlink slot n+D.

For another example, for the cell DRX, if the terminal device receives, in a downlink slot n, a PDCCH indicating activation/deactivation of the cell DRX, the terminal device considers that the cell DRX activation/deactivation indication takes effect at a 1^{st} uplink slot whose starting time point is not earlier than (that is, equal to or later than) a starting time point of a downlink slot n+D.

The above-mentioned D denotes a period of time reserved for the terminal device to process the PDCCH, and a value of D is related to a subcarrier spacing (sub-carrier space, SCS) of the PDCCH. A relationship between the two is as shown in the following Table 1.

**Table 1: Value of D**

| Subcarrier spacing (kHz) of a PDCCH | Value of D (in slots) |
|---|---|
| 15 | 3 |
| 30 | 6 |
| 60 | 12 |
| 120 | 24 |
| 480 | 96 |
| 960 | 192 |

In a conventional system (such as a TN system), there is a relatively small wireless signal transmission delay between a terminal device and a network device, and there are small differences in signal transmission delays between different terminal devices and a network device within a same cell. After the network device issues a cell DRX activation/deactivation indication, it may be considered that the indication substantially takes effect synchronously on all terminal devices within the cell. However, in a system with a relatively large wireless signal transmission delay, there may be a problem that effective times of the cell DRX activation/deactivation indication are not synchronized, which adversely affects transmission performance of the system.

An NTN system is used as an example. Coverage of a cell in the NTN system is much larger than that of a TN cell, and there are also great differences in signal transmission delays between different terminal devices and the network device. In particular, for a cell corresponding to a GEO satellite, a signal transmission delay between a terminal device at the edge of the cell and the network device is approximately 10.3 ms greater than a signal transmission delay between a terminal device at the center of the cell and the network device. FIG. 7 is used as an example. After the network device transmits a cell DRX deactivation indication, a terminal device 1 located closer to the center of a cell receives a PDCCH after a transmission delay Tₚ₁, and then considers that the cell DRX deactivation indication takes effect after an additional time period D. Thereafter, the terminal device transmits no CG or SR to the network device during the inactive time period of the cell DRX, that is, the network device does not receive any CG or SR from the terminal device 1 during the inactive time period of the cell DRX after an instant t1. For a terminal device 2 located farthest from the center of cell, the network device does not receive any CG or SR from the terminal device 2 during the inactive time period of the cell DRX after an instant t2. Assuming that the cell includes only the terminal device 1 and the terminal device 2, for the network device, the network device is not required to receive any CG or SR from all terminal devices after the instant t2. However, during a time period from t1 to t2, the network device has not fully entered a DRX state, and therefore has not reached an optimal energy saving state. For the terminal device 1 closer to the center of the cell, uplink transmission performance of the terminal device 1 is affected to some extent due to early application of the cell DRX. From a perspective of the entire system, an ideal situation is that the cell DRX is applied on all terminal devices synchronously in time. This not only helps improve an energy saving effect of the network device, but also minimizes an impact of energy saving of the network device on transmission of the terminal devices.

The foregoing problem exists not only in cell DRX scenarios but also in other DRX scenarios. For example, in an NTN system, a satellite usually generates a plurality of beams. The plurality of beams may correspond to a same cell, or may correspond to different cells. Due to limited maximum transmit power of a satellite and a limited bandwidth of a feeder link, if a minimum signal-to-noise ratio (signal-to-noise ratio, SNR) requirement of a physical layer channel is required to be satisfied, the satellite generally cannot activate all beams at a same instant, but can only activate part of the beams simultaneously. Therefore, different beams or cells may be multiplexed via time division multiplexing (time division multiplexing, TDM). A TDM process may be referred to as beam DRX/DTX. Currently, the beam DRX/DTX mechanism is implemented based on the cell DTX/DRX mentioned above, and therefore the beam DRX faces a similar problem, that is, effective times of the DRX activation/deactivation indication on terminal devices are inconsistent.

In conclusion, how to properly determine the effective time of the indication information (used to activate/deactivate the DRX related to the network device) is a problem that is required to be solved.

To solve the above problems, the following describes embodiments of this application in detail by using examples.

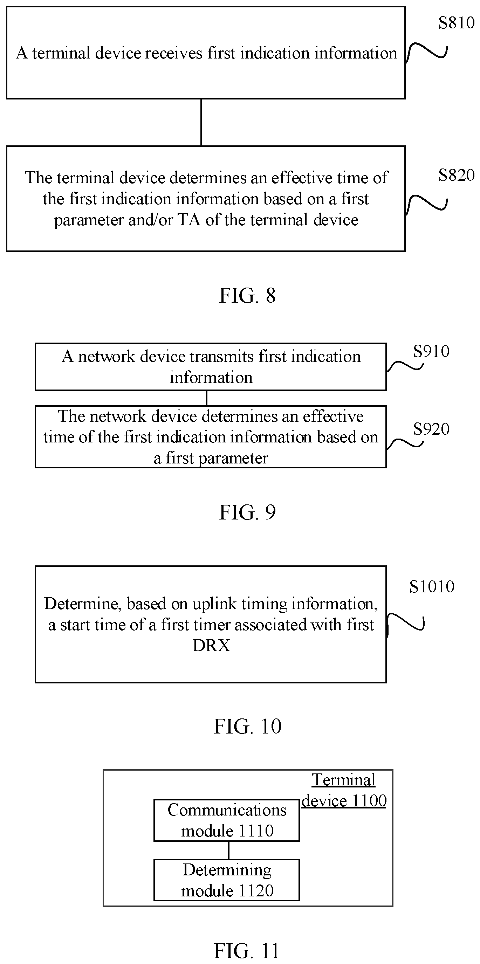

FIG. 8 is a schematic flowchart of a wireless communication method according to an embodiment of this application. FIG. 8 is described from a perspective of a terminal device. The terminal device may be a terminal device in a communications system with a relatively large wireless signal transmission delay, such as a terminal device in an NTN system.

Referring to FIG. 8, in step S810, the terminal device receives first indication information.

The first indication information (which may also be referred to as first indication signalling) is used to activate or deactivate first DRX.

The first DRX refers to DRX associated with a network device. For example, the first DRX is cell DRX. For another example, the first DRX is beam DRX (DRX of a beam transmitted by the network device).

The first indication information may be carried by using dynamic signalling. In some implementations, the first indication information may be carried by using layer 1 (L1) signalling. For example, the first indication information may be carried by using a PDCCH. In some other implementations, the first indication information may be carried by using layer 2 (L2) signalling. For example, the first indication information may be carried by using a MAC CE.

Assuming that the first DRX is the cell DRX, the first indication information may be referred to as a cell DRX activation/deactivation indication. The first indication information may be an indication for a cell or an indication for a cell group.

Assuming that the first DRX is the beam DRX, the first indication information may be referred to as a beam DRX activation/deactivation indication. The first indication information may be an indication for a beam or an indication for a beam group.

Still referring to FIG. 8, in step S820, the terminal device determines an effective time of the first indication information based on a first parameter and/or TA of the terminal device.

The first parameter may be a parameter configured by the network device, or may be a pre-configured parameter. In an example, a value of the first parameter may be configured by the network device by using system information.

In some implementations, the first parameter may be a timing-related parameter. For example, the first parameter may be a timing offset. An NTN system is used as an example. The first parameter may be a first timing offset associated with the NTN. The first timing offset may be, for example, K_{offset} for NTN enhancement mentioned above.

The first parameter may be a cell-level parameter or a beam-level parameter. The cell-level parameter refers to that the first parameter is effective within coverage of a cell, and a same value of the first parameter is used for all terminal devices within the coverage of the cell. The beam-level parameter refers to that the first parameter is effective within coverage of a beam, and a same value of the first parameter is used for all terminal devices within the coverage of the beam. For example, the first DRX is cell DRX, and the first parameter is a cell-level parameter. For another example, the first DRX is beam DRX, and the first parameter is a beam-level parameter.

In some implementations, the first parameter may be a parameter specifically introduced for determining the effective time of the first indication information (for example, a specially introduced timing offset). The NTN system is used as an example. For the newly introduced parameter, reference may be made to the design of K_{offset} used for NTN enhancement.

For example, the first DRX is cell/beam DRX. The effective time of the first indication information is determined based on the first parameter and/or the TA of the terminal device (the TA refers to current TA of the terminal device), which helps synchronize the application time of the cell/beam DRX on terminal devices within a cell/beam, that is, synchronizes impacts of different terminal devices on reception of the network device. Therefore, using the solution provided in embodiments of this application helps improve an energy saving effect of the network device, and also helps minimize an impact of energy saving of the network device on transmission of the terminal device.

There are a plurality of manners of determining the effective time of the first indication information based on the first parameter and/or the TA of the terminal device. Several possible implementations are given below.

In some implementations, an absolute time may be determined based on the first parameter and/or the TA of the terminal device, and the absolute time may be then used as the effective time of the first indication information.

In some implementations, a first uplink slot may be determined based on the first parameter and/or the TA of the terminal device. Then, the effective time of the first indication information is determined based on the first uplink slot. For example, the first uplink slot may be directly used as the effective time of the first indication information. For another example, the effective time of the first indication information may be obtained by performing calculations based on the first uplink slot. There may be a plurality of manners of determining the first uplink slot.

### Implementation 1: The first uplink slot is determined based on a first downlink slot, and the first downlink slot is determined based on the first parameter and/or the TA

The first uplink slot is a 1^{st} uplink slot whose starting time is not earlier than (that is, equal to or later than) a starting time of the first downlink slot. Alternatively, in some implementations, the first uplink slot may be determined based on the first downlink slot and a specific offset.

The first downlink slot may be determined based on a difference between a second parameter and the TA of the terminal device. The second parameter mentioned herein is determined based on the first parameter. For example, the second parameter and the first parameter may be the same parameter. For another example, the second parameter may be derived from the first parameter through calculations.

In some implementations, in addition to considering the second parameter and the TA of the terminal device, the first downlink slot may also be determined based on a second downlink slot and/or first duration. The second downlink slot may be a slot in which the terminal device receives the first indication information. The first duration may be used to indicate a period of time required by the terminal device to process the first indication information. A value of the first duration may be determined based on configuration information from the network device or pre-configuration information, or may be a predefined value. The first duration may be associated with a subcarrier spacing corresponding to the first indication information (for example, a subcarrier spacing of a PDCCH carrying the first indication information). Assuming that the first duration is denoted as D, a value of D may be determined, for example, based on Table 2.

**Table 2: Value of D**

| Subcarrier spacing (kHz) of a PDCCH | Value of D (in slots) |
|---|---|
| 15 | 3 |
| 30 | 6 |
| 60 | 12 |
| 120 | 24 |
| 480 | 96 |
| 960 | 192 |

In an example, the first downlink slot may satisfy the following formula or may be determined based on the following formula: N = n + D + M - TA. In which, N denotes a slot number of the first downlink slot, n denotes a slot number of the second downlink slot, D denotes the first duration, and M denotes the second parameter.

For ease of understanding, two specific examples are provided below by using an example in which the first DRX is cell DRX and an example in which the first DRX is beam DRX, respectively. In the following examples, if the first DRX is the cell DRX, the first indication information is referred to as a cell DRX activation/deactivation indication; and if the first DRX is the beam DRX, the first indication information is referred to as a beam DRX activation/deactivation indication.

### Example 1: The first DRX is the cell DRX

For each cell (group), the terminal device determines that the effective time of the cell DRX activation/deactivation indication is the first uplink slot X. The first uplink slot X is a 1^{st} uplink slot whose starting time point is not earlier than (that is, equal to or later than) a starting time point of the first downlink slot N, where N = n + D + M - TA. In the formula above, n denotes a slot number of a downlink slot in which the cell DRX activation/deactivation indication is received. D denotes a period of time required by the terminal device to process the cell DRX activation/deactivation indication, and a value of D may be a predefined value. M denotes a quantity related to the first parameter K, where a value of K may be configured for the terminal device by the network device by using a system message. For example, for the cell DRX activation/deactivation indication, K is cell-level K_{offset} configured by the network device. TA is a current TA value of the terminal device.

### Example 2: The first DRX is the beam DRX

For each beam (group), the terminal device determines that the effective time of the beam DRX activation/deactivation indication is the first uplink slot X. The first uplink slot X is a 1^{st} uplink slot whose starting time point is not earlier than (that is, equal to or later than) a starting time point of the first downlink slot N, where N = n + D + M - TA. In the formula above, n denotes a slot number of a downlink slot in which the beam DRX activation/deactivation indication is received. D denotes a period of time required by the terminal device to process the beam DRX activation/deactivation indication, and a value of D may be a predefined value. M denotes a quantity related to the first parameter K, where a value of K may be configured for the terminal device by the network device by using a system message. For example, for the beam DRX activation/deactivation indication, K is cell-level K_{offset} configured by the network device. TA is a current TA value of the terminal device.

### Implementation 2: The first uplink slot is determined based on the first parameter and the second uplink slot

The second uplink slot may be determined based on the second downlink slot and/or the first duration. The second downlink slot may be a slot in which the terminal device receives the first indication information. The first duration may be used to indicate a period of time required by the terminal device to process the first indication information. A value of the first duration may be determined based on configuration information from the network device or pre-configuration information, or may be a predefined value. The first duration may be associated with a subcarrier spacing (for example, a subcarrier spacing of a PDCCH carrying the first indication information) corresponding to the first indication information. Assuming that the first duration is denoted as D, a value of D may be determined, for example, based on Table 2 above.

For example, the second uplink slot is a 1^{st} uplink slot whose starting time is not earlier than a starting time of a target slot. The target slot may be determined based on the second downlink slot and the first duration. In an example, the target slot is a slot corresponding to a sum of the second downlink slot and the first duration. Assuming that the second uplink slot is an uplink slot X1, the uplink slot X1 may be a 1^{st} uplink slot whose starting time point is not earlier than (that is, equal to or later than) a starting time point of a downlink slot n+D. The downlink slot n represents the second downlink slot mentioned above, and D denotes the first duration mentioned above.

For another example, the second uplink slot may be determined based on the target slot and a specific offset.

The first uplink slot may satisfy the following formula or may be determined based on the following formula: X = X1 + M. In which, X denotes a slot number of the first uplink slot, X1 denotes a slot number of the second uplink slot, and M denotes the second parameter. The second parameter mentioned herein may be determined based on the first parameter. For example, the second parameter and the first parameter may be the same parameter. For another example, the second parameter may be derived from the first parameter through calculations.

For ease of understanding, two specific examples are provided below by using an example in which the first DRX is cell DRX and an example in which the first DRX is beam DRX, respectively. In the following examples, if the first DRX is the cell DRX, the first indication information is referred to as a cell DRX activation/deactivation indication; and if the first DRX is the beam DRX, the first indication information is referred to as a beam DRX activation/deactivation indication.

### Example 1: The first DRX is the cell DRX

For each cell (group), the terminal device determines that the effective time of the cell DRX activation/deactivation indication is the first uplink slot X. Assuming that the terminal device receives the cell DRX activation/deactivation indication in a downlink slot n, the first uplink slot X satisfies: X = X1 + M, where X1 denotes the second uplink slot, and the second uplink slot X1 is a 1^{st} uplink slot whose starting time point is not earlier than (that is, equal to or later than) a starting time point of a downlink slot n+D. The n denotes a slot number of a downlink slot in which the cell DRX activation/deactivation indication is received. D denotes a period of time required by the terminal device to process the cell DRX activation/deactivation indication, and a value of D may be a predefined value. M denotes a quantity related to the first parameter K, where a value of K may be configured for the terminal device by the network device by using a system message. For example, for the cell DRX activation/deactivation indication, K is cell-level K_{offset} configured by the network device.

### Example 2: The first DRX is the beam DRX

For each beam (group), the terminal device determines that the effective time of the beam DRX activation/deactivation indication is the first uplink slot X. Assuming that the terminal device receives the beam DRX activation/deactivation indication in a downlink slot n, the first uplink slot X satisfies: X = X1 + M, where X1 denotes the second uplink slot, and the second uplink slot X1 is a 1^{st} uplink slot whose starting time point is not earlier than (that is, equal to or later than) a starting time point of a downlink slot n+D. The n denotes a slot number of a downlink slot in which the beam DRX activation/deactivation indication is received. D denotes a period of time required by the terminal device to process the beam DRX activation/deactivation indication, and a value of D may be a predefined value. M denotes a quantity related to the first parameter K, where a value of K may be configured for the terminal device by the network device by using a system message. For example, for the beam DRX activation/deactivation indication, K is beam-level K_{offset} configured by the network device.

In some implementations, before step S810, the terminal device may first receive configuration information related to the first DRX. The configuration information related to the first DRX may be carried in a system broadcast message or in dedicated RRC signalling for the terminal device.

The configuration information related to the first DRX may include, for example, one or more of the following: one or more DRX patterns, or a configuration parameter for each DRX pattern.

For example, the first DRX is the cell DRX. The one or more DRX patterns may be one or more DRX patterns configured for each cell in at least one cell, or one or more DRX patterns configured for each cell group in at least one cell group. The at least one cell or the at least one cell group mentioned here refers to a serving cell or a serving cell group of the terminal device.

For example, the first DRX is the beam DRX. The one or more DRX patterns may be one or more DRX patterns configured for each beam in at least one beam, or one or more DRX patterns configured for each beam group in at least one beam group. The at least one beam or the at least one beam group mentioned here refers to a serving beam or a serving beam group of the terminal device.

A configuration parameter for a DRX pattern may include, for example, one or more of the following: a DRX cycle, a starting time offset of the DRX cycle, or a DRX on-duration timer.

In some implementations, after step S820, that is, after the terminal device determines the effective time of the first indication information, the terminal device may activate/deactivate, according to the first indication information, the configuration of the first DRX starting from the effective time of the first indication information.

Assuming that the first DRX is cell DRX corresponding to one cell or one cell group of the terminal device, and the effective time of the first indication information is the first uplink slot, the terminal device may activate/deactivate the DRX configuration corresponding to the cell or the cell group starting from the first uplink slot.

Assuming that the first DRX is cell DRX corresponding to one beam or one beam group of the terminal device, and the effective time of the first indication information is the first uplink slot, the terminal device may activate/deactivate the DRX configuration corresponding to the beam or the beam group starting from the first uplink slot.

The wireless communication method provided in embodiments of this application is described in detail above with reference to FIG. 8 from the perspective of the terminal device. The wireless communication method provided in embodiments of this application is described below with reference to FIG. 9 from the perspective of the network device.

FIG. 9 is a schematic flowchart of a wireless communication method according to another embodiment of this application. FIG. 9 is illustrated from the perspective of the network device. The network device may be a network device in a communications system with a relatively large wireless signal transmission delay, such as a network device in an NTN system.

Referring to FIG. 9, in step S910, the network device transmits first indication information.

The first indication information (which may also be referred to as first indication signalling) is used to activate or deactivate first DRX.

The first DRX refers to DRX associated with a network device. For example, the first DRX is cell DRX. For another example, the first DRX is beam DRX (DRX of a beam transmitted by the network device).

The first indication information may be carried by using dynamic signalling. In some implementations, the first indication information may be carried by using layer 1 (L1) signalling. For example, the first indication information may be carried by using a PDCCH. In some other implementations, the first indication information may be carried by using layer 2 (L2) signalling. For example, the first indication information may be carried by using a MAC CE.

Assuming that the first DRX is cell DRX, the first indication information may be referred to as a cell DRX activation/deactivation indication. The first indication information may be an indication for a cell or an indication for a cell group.

Assuming that the first DRX is beam DRX, the first indication information may be referred to as a beam DRX activation/deactivation indication. The first indication information may be an indication for a beam or an indication for a beam group.

Still referring to FIG. 9, in step S920, the network device determines an effective time of the first indication information based on a first parameter.

The first parameter may be a parameter configured by the network device, or may be a pre-configured parameter. In an example, a value of the first parameter may be configured by the network device by using system information.

In some implementations, the first parameter may be a timing-related parameter. For example, the first parameter may be a timing offset. An NTN system is used as an example. The first parameter may be a first timing offset associated with the NTN. The first timing offset may be, for example, K_{offset} for NTN enhancement mentioned above.

The first parameter may be a cell-level parameter or a beam-level parameter. The cell-level parameter refers to that the first parameter is effective within coverage of a cell, and a same value of the first parameter is used for all terminal devices within the coverage of the cell. The beam-level parameter refers to that the first parameter is effective within a range of a beam, and a same value of the first parameter is used for all terminal devices within the range of the beam. For example, the first DRX is cell DRX, and the first parameter is a cell-level parameter. For another example, the first DRX is beam DRX, and the first parameter is a beam-level parameter.

In some implementations, the first parameter may be a parameter specifically introduced for determining the effective time of the first indication information (for example, a specially introduced timing offset). The NTN system is used as an example. For the newly introduced parameter, reference may be made to the design of K_{offset} used for NTN enhancement.

For example, the first DRX is cell/beam DRX. The effective time of the first indication information is determined based on the first parameter, which helps synchronize the application time of the cell/beam DRX on terminal devices within a cell/beam, that is, synchronizes impacts of different terminal devices on reception of the network device. Therefore, using the solution provided in embodiments of this application helps improve an energy saving effect of the network device, and also helps minimize an impact of energy saving of the network device on transmission of the terminal device.

There are a plurality of manners of determining the effective time of the first indication information based on the first parameter. Several possible implementations are given below.

In some implementations, an absolute time may be determined based on the first parameter, and the absolute time may be then used as the effective time of the first indication information.

In some implementations, the first uplink slot may be determined based on the first parameter. Then, the effective time of the first indication information is determined based on the first uplink slot. For example, the first uplink slot may be directly used as the effective time of the first indication information. For another example, the effective time of the first indication information may be obtained by performing calculations based on the first uplink slot. There may be a plurality of manners of determining the first uplink slot.

### Implementation 1: The first uplink slot is determined based on a first downlink slot, and the first downlink slot is determined based on the first parameter

The first uplink slot is a 1^{st} uplink slot whose starting time is not earlier than (that is, equal to or later than) a starting time of the first downlink slot. Alternatively, in some implementations, the first uplink slot may be determined based on the first downlink slot and a specific offset.

The first downlink slot may be determined based on a second parameter. The second parameter mentioned herein is determined based on the first parameter. For example, the second parameter and the first parameter may be the same parameter. For another example, the second parameter may be derived from the first parameter through calculations.

In some implementations, in addition to considering the second parameter, the first downlink slot may also be determined based on a second downlink slot and/or first duration. The second downlink slot may be a slot in which the network device transmits the first indication information. The first duration may be used to indicate a period of time required by the terminal device to process the first indication information. A value of the first duration may be determined based on configuration information from the network device or pre-configuration information, or may be a predefined value. The first duration may be associated with a subcarrier spacing (for example, a subcarrier spacing of a PDCCH carrying the first indication information) corresponding to the first indication information. Assuming that the first duration is denoted as D, a value of D may be determined, for example, based on Table 2 above.

In an example, the first downlink slot may satisfy the following formula or may be determined based on the following formula: N = n + D + M. In which, N denotes a slot number of the first downlink slot, n denotes a slot number of the second downlink slot, D denotes the first duration, and M denotes the second parameter.

For ease of understanding, two specific examples are provided below by using an example in which the first DRX is cell DRX and an example in which the first DRX is beam DRX, respectively. In the following examples, if the first DRX is the cell DRX, the first indication information is referred to as a cell DRX activation/deactivation indication; and if the first DRX is the beam DRX, the first indication information is referred to as a beam DRX activation/deactivation indication.

### Example 1: The first DRX is the cell DRX

For each cell (group), the network device determines that the effective time of the cell DRX activation/deactivation indication is the first uplink slot X. The first uplink slot X is a 1^{st} uplink slot whose starting time point is not earlier than (that is, equal to or later than) a starting time point of the first downlink slot N, where N = n + D + M. In the formula above, n denotes a slot number of a downlink slot in which the cell DRX activation/deactivation indication is received. D denotes a period of time required by the terminal device to process the cell DRX activation/deactivation indication, and a value of D may be a predefined value. M denotes a quantity related to the first parameter K, where a value of K may be configured for the terminal device by the network device by using a system message. For example, for the cell DRX activation/deactivation indication, K is cell-level K_{offset} configured by the network device.

### Example 2: The first DRX is the beam DRX

For each beam (group), the network device determines that the effective time of the beam DRX activation/deactivation indication is the first uplink slot X. The first uplink slot X is a 1^{st} uplink slot whose starting time point is not earlier than (that is, equal to or later than) a starting time point of the first downlink slot N, where N = n + D + M. In the formula above, n denotes a slot number of a downlink slot in which the beam DRX activation/deactivation indication is received. D denotes a period of time required by the terminal device to process the beam DRX activation/deactivation indication, and a value of D may be a predefined value. M denotes a quantity related to the first parameter K, where a value of K may be configured for the terminal device by the network device by using a system message. For example, for the beam DRX activation/deactivation indication, K is cell-level K_{offset} configured by the network device.

### Implementation 2: The first uplink slot is determined based on the first parameter and the second uplink slot

The second uplink slot may be determined based on the second downlink slot and/or the first duration. The second downlink slot may be a slot in which the network device transmits the first indication information. The first duration may be used to indicate a period of time required by the terminal device to process the first indication information. A value of the first duration may be determined based on configuration information from the network device or pre-configuration information, or may be a predefined value. The first duration may be associated with a subcarrier spacing (for example, a subcarrier spacing of a PDCCH carrying the first indication information) corresponding to the first indication information. Assuming that the first duration is denoted as D, a value of D may be determined, for example, based on Table 2 above.

For example, the second uplink slot is a 1^{st} uplink slot whose starting time is not earlier than a starting time of a target slot. The target slot may be determined based on the second downlink slot and the first duration. In an example, the target slot is a slot corresponding to a sum of the second downlink slot and the first duration. Assuming that the second uplink slot is an uplink slot X1, the uplink slot X1 may be a 1^{st} uplink slot whose starting time point is not earlier than (that is, equal to or later than) a starting time point of a downlink slot n+D. The downlink slot n represents the second downlink slot mentioned above, and D denotes the first duration mentioned above.

For another example, the second uplink slot may be determined based on the target slot and a specific offset.

The first uplink slot may satisfy the following formula or may be determined based on the following formula: X = X1 + M. In which, X denotes a slot number of the first uplink slot, X1 denotes a slot number of the second uplink slot, and M denotes the second parameter. The second parameter mentioned herein may be determined based on the first parameter. For example, the second parameter and the first parameter may be the same parameter. For another example, the second parameter may be derived from the first parameter through calculations.

For ease of understanding, two specific examples are provided below by using an example in which the first DRX is cell DRX and an example in which the first DRX is beam DRX, respectively. In the following examples, if the first DRX is the cell DRX, the first indication information is referred to as a cell DRX activation/deactivation indication; and if the first DRX is the beam DRX, the first indication information is referred to as a beam DRX activation/deactivation indication.

### Example 1: The first DRX is the cell DRX

For each cell (group), the network device determines that the effective time of the cell DRX activation/deactivation indication is the first uplink slot X. Assuming that the terminal device receives the cell DRX activation/deactivation indication in a downlink slot n, the first uplink slot X satisfies: X = X1 + M, where X1 denotes the second uplink slot, and the second uplink slot X1 is a 1^{st} uplink slot whose starting time point is not earlier than (that is, equal to or later than) a starting time point of a downlink slot n+D. The n denotes a slot number of a downlink slot in which the cell DRX activation/deactivation indication is received. D denotes a period of time required by the terminal device to process the cell DRX activation/deactivation indication, and a value of D may be a predefined value. M denotes a quantity related to the first parameter K, where a value of K may be configured for the terminal device by the network device by using a system message. For example, for the cell DRX activation/deactivation indication, K is cell-level K_{offset} configured by the network device.

### Example 2: The first DRX is the beam DRX

For each beam (group), the network device determines that the effective time of the beam DRX activation/deactivation indication is the first uplink slot X. Assuming that the terminal device receives the beam DRX activation/deactivation indication in a downlink slot n, the first uplink slot X satisfies: X = X1 + M, where X1 denotes the second uplink slot, and the second uplink slot X1 is a 1^{st} uplink slot whose starting time point is not earlier than (that is, equal to or later than) a starting time point of a downlink slot n+D. The n denotes a slot number of a downlink slot in which the beam DRX activation/deactivation indication is received. D denotes a period of time required by the terminal device to process the beam DRX activation/deactivation indication, and a value of D may be a predefined value. M denotes a quantity related to the first parameter K, where a value of K may be configured for the terminal device by the network device by using a system message. For example, for the beam DRX activation/deactivation indication, K is beam-level K_{offset} configured by the network device.

In some implementations, the network device may transmit configuration information related to the first DRX. The configuration information related to the first DRX may be carried in a system broadcast message or in dedicated RRC signalling for the terminal device.

The configuration information related to the first DRX may include, for example, one or more of the following: one or more DRX patterns, or a configuration parameter for each DRX pattern.

For example, the first DRX is the cell DRX. The one or more DRX patterns may be one or more DRX patterns configured for each cell in at least one cell, or one or more DRX patterns configured for each cell group in at least one cell group. The at least one cell or the at least one cell group mentioned here refers to a serving cell or a serving cell group of the terminal device.

For example, the first DRX is the beam DRX. The one or more DRX patterns may be one or more DRX patterns configured for each beam in at least one beam, or one or more DRX patterns configured for each beam group in at least one beam group. The at least one beam or the at least one beam group mentioned here refers to a serving beam or a serving beam group of the terminal device.

A configuration parameter for a DRX pattern may include, for example, one or more of the following: a DRX cycle, a starting time offset of the DRX cycle, or a DRX on-duration timer.

The manners of determining the effective time of the indication information for activating or deactivating the first DRX are described in detail above with reference to FIG. 8 and FIG. 9. A manner of determining the start time of the timer associated with the first DRX is described in detail below with reference to FIG. 10. It should be understood that, the embodiment illustrated in FIG. 10 may be independent from or combined with the embodiments illustrated in FIG. 8 and FIG. 9.

FIG. 10 is a schematic flowchart of a wireless communication method according to still another embodiment of this application. The method illustrated in FIG. 10 may be executed by a terminal device or a network device. The terminal device or the network device may be a terminal device or a network device in a TN system, or a terminal device or a network device in an NTN system.

Referring to FIG. 10, in step S1010, a start time of a first timer associated with the first DRX is determined based on uplink timing (UL timing) information.

The first DRX refers to DRX associated with a network device. For example, the first DRX is cell DRX. For another example, the first DRX is beam DRX (DRX of a beam transmitted by the network device).

The first timer may be any type of timer associated with the first DRX. For example, the first timer may be an on-duration timer (onDurationTimer) of the first DRX. Assuming that the first DRX is cell DRX, the first timer may be a celldrx-onDurationTimer.

The uplink timing information mentioned above may include an uplink system frame number (uplink system frame number, UL SFN) and/or an uplink subframe number (UL subframe).

In addition to the uplink timing information, the start time of the first timer may also be determined based on one or more of the following: a cycle of the first DRX, a starting time offset of the first DRX, or a slot offset of the first DRX.

In an example, for each serving cell of the terminal device that is configured with the cell DRX, if at least one cell in the serving cell is in an active state, the terminal device may determine a start time of a cell DRX timer corresponding to the cell based on the uplink timing information (such as an uplink SFN and/or an uplink subframe).

In an example, for each serving beam of the terminal device that is configured with the beam DRX, if at least one beam with the beam DRX configuration in the serving beam is in an active state, the terminal device may determine a start time of a beam DRX timer corresponding to the serving beam based on the uplink timing information (such as an uplink SFN and/or an uplink subframe).

In a more specific example, assuming that the first DRX is the cell DRX, the terminal device determines that a start time of the celldrx-onDurationTimer of a serving cell is as follows: If [(SFN × 10) + subframe number] modulo (celldrx - Cycle) = (celldrx - StartOffset), the terminal device starts the celldrx-onDurationTimer corresponding to the serving cell at an instant obtained by shifting, by celldrx-SlotOffset, starting from a starting time of the uplink subframe. In the formula above, SFN is an uplink system frame number, and subfame number is an uplink subframe number. The beam DRX may be determined in a similar manner, simply by replacing the cellrelated information with corresponding beam-related information.

In some implementations, the network device may transmit configuration information related to the first DRX (or the terminal device may receive configuration information related to the first DRX). The configuration information related to the first DRX may be carried in a system broadcast message or in dedicated RRC signalling for the terminal device.

The configuration information related to the first DRX may include, for example, one or more of the following: one or more DRX patterns, or a configuration parameter for each DRX pattern.

For example, the first DRX is the cell DRX. The one or more DRX patterns may be one or more DRX patterns configured for each cell in at least one cell, or one or more DRX patterns configured for each cell group in at least one cell group. The at least one cell or the at least one cell group mentioned here refers to a serving cell or a serving cell group of the terminal device.

For example, the first DRX is the beam DRX. The one or more DRX patterns may be one or more DRX patterns configured for each beam in at least one beam, or one or more DRX patterns configured for each beam group in at least one beam group. The at least one beam or the at least one beam group mentioned here refers to a serving beam or a serving beam group of the terminal device.

A configuration parameter for a DRX pattern may include, for example, one or more of the following: a DRX cycle, a starting time offset of the DRX cycle, or a DRX on-duration timer.

The method embodiments of this application are described above in detail with reference to FIG. 1 to FIG. 10. Apparatus embodiments of this application are described below in detail with reference to FIG. 11 to FIG. 13. It should be understood that the descriptions of the method embodiments correspond to descriptions of the apparatus embodiments, and therefore, for parts that are not described in detail, reference may be made to the foregoing method embodiments.

FIG. 11 is a schematic structural diagram of a terminal device according to an embodiment of this application. The terminal device 1100 shown in FIG. 11 includes a communications module 1110 and a determining module 1120.

The communications module 1110 is configured to receive first indication information, where the first indication information is used to activate or deactivate first DRX, and the first DRX is DRX associated with a network device.

The determining module 1120 is configured to determine an effective time of the first indication information based on a first parameter configured by the network device and/or timing advance TA of the terminal device.

In some implementations, the first parameter is a first timing offset associated with the NTN.

In some implementations, the effective time of the first indication information is determined based on a first uplink slot, and the first uplink slot is determined based on the first parameter and/or the TA.

In some implementations, the first uplink slot is determined based on a first downlink slot, and the first downlink slot is determined based on the first parameter and/or the TA.

In some implementations, the first downlink slot is determined based on a difference between a second parameter and the TA, and the second parameter is determined based on the first parameter.

In some implementations, the first downlink slot is further determined based on one or more of the following: a second downlink slot, where the second downlink slot is a slot in which the terminal device receives the first indication information; or first duration, where the first duration is used to indicate a period of time required by the terminal device to process the first indication information. 44. According to the terminal device according to claim 43, where the first downlink slot meets: N = n + D + M - TA. In which, N denotes a slot number of the first downlink slot, n denotes a slot number of the second downlink slot, D denotes the first duration, M denotes a second parameter, and the second parameter is determined based on the first parameter.

In some implementations, the first uplink slot is a 1^{st} uplink slot whose starting time is not earlier than a starting time of the first downlink slot.

In some implementations, the first uplink slot is further determined based on a second uplink slot, and the second uplink slot is determined based on one or more of the following: a second downlink slot, where the second downlink slot is a slot in which the terminal device receives the first indication information; or first duration, where the first duration is used to indicate a period of time required by the terminal device to process the first indication information.

In some implementations, the second uplink slot is a 1^{st} uplink slot whose starting time is not earlier than a starting time of a target slot, and the target slot is determined based on the second downlink slot and the first duration.

In some implementations, the target slot is a slot corresponding to a sum of the second downlink slot and the first duration.

In some implementations, the first uplink slot meets: X = X1 + M. In which, X denotes a slot number of the first uplink slot, X1 denotes a slot number of the second uplink slot, M denotes a second parameter, and the second parameter is determined based on the first parameter.

In some implementations, the second parameter is the first parameter.

In some implementations, the effective time of the first indication information is the first uplink slot.

In some implementations, the first DRX includes one or more of the following: cell DRX or beam DRX.

In some implementations, a start time of a first timer associated with the first DRX is determined based on uplink timing information.

In some implementations, the uplink timing information includes an uplink system frame number and/or an uplink subframe number.

In some implementations, the start time of the first timer is further determined based on one or more of the following: a cycle of the first DRX, a starting time offset of the first DRX, or a slot offset of the first DRX.

In some implementations, the first timer is an on-duration timer of the first DRX.

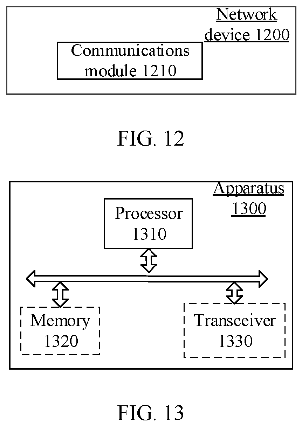

FIG. 12 is a schematic structural diagram of a network device according to an embodiment of this application. The network device 1200 shown in FIG. 12 includes a communications module 1210. The communications module 1210 is configured to transmit first indication information to a terminal device, where the first indication information is used to activate or deactivate first DRX, and the first DRX is DRX associated with the network device. An effective time of the first indication information is determined based on a first parameter configured by the network device.

In some implementations, the first parameter is a first timing offset associated with the NTN.

In some implementations, the effective time of the first indication information is determined based on a first uplink slot, and the first uplink slot is determined based on the first parameter.

In some implementations, the first uplink slot is determined based on a first downlink slot, and the first downlink slot is determined based on the first parameter.

In some implementations, the first downlink slot is further determined based on one or more of the following: a second downlink slot, where the second downlink slot is a slot in which the network device transmits the first indication information; or first duration, where the first duration is used to indicate a period of time required by the terminal device to process the first indication information.

In some implementations, the first downlink slot meets: N = n + D + M. In which, N denotes a slot number of the first downlink slot, n denotes a slot number of the second downlink slot, D denotes the first duration, M denotes a second parameter, and the second parameter is determined based on the first parameter.

In some implementations, the first uplink slot is a 1^{st} uplink slot whose starting time is not earlier than a starting time of the first downlink slot.

In some implementations, the first uplink slot is further determined based on a second uplink slot, and the second uplink slot is determined based on one or more of the following: a second downlink slot, where the second downlink slot is a slot in which the network device transmits the first indication information; or first duration, where the first duration is used to indicate a period of time required by the terminal device to process the first indication information.

In some implementations, the second uplink slot is a 1^{st} uplink slot whose starting time is not earlier than a starting time of a target slot, and the target slot is determined based on the second downlink slot and the first duration.

In some implementations, the target slot is a slot corresponding to a sum of the second downlink slot and the first duration.

In some implementations, the first uplink slot meets: X = X1 + M. In which, X denotes a slot number of the first uplink slot, X1 denotes a slot number of the second uplink slot, M denotes a second parameter, and the second parameter is determined based on the first parameter.

In some implementations, the second parameter is the first parameter.

In some implementations, the effective time of the first indication information is the first uplink slot.

In some implementations, the first DRX includes one or more of the following: cell DRX or beam DRX.

In some implementations, a start time of a first timer associated with the first DRX is determined based on uplink timing information.

In some implementations, the uplink timing information includes an uplink system frame number and/or an uplink subframe number.

In some implementations, the start time of the first timer is further determined based on one or more of the following: a cycle of the first DRX, a starting time offset of the first DRX, or a slot offset of the first DRX.

In some implementations, the first timer is an on-duration timer of the first DRX.

FIG. 13 is a schematic structural diagram of an apparatus according to an embodiment of this application. Dashed lines in FIG. 13 indicate that a unit or module is optional. The apparatus 1300 may be configured to implement the methods described in the foregoing method embodiments. The apparatus 1300 may be a chip, a terminal device, or a network device.

The apparatus 1300 may include one or more processors 1310. The processor 1310 may support the apparatus 1300 in implementing the methods described in the foregoing method embodiments. The processor 1310 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1300 may further include one or more memories 1320. The memory 1320 stores a program, and the program may be executed by the processor 1310, so that the apparatus 1300 executes the method described in the foregoing method embodiment. The memory 1320 may be separated from or integrated into the processor 1310.

The apparatus 1300 may further include a transceiver 1330. The processor 1310 may communicate with another device or chip by using the transceiver 1330. For example, the processor 1310 may transmit data to and receive data from another device or chip through the transceiver 1330.

An embodiment of this application further provides a computer-readable storage medium for storing a program. The computer-readable storage medium may be applied to the terminal device or the network device provided in embodiments of this application, and the program causes a computer to execute a method executed by the terminal device or the network device in embodiments of this application.

An embodiment of this application further provides a computer program product. The computer program product includes a program. The computer program product may be applied to the terminal device or the network device provided in the embodiments of this application, and the program causes a computer to execute the method performed by the terminal device or the network device in various embodiments of this application.

An embodiment of this application further provides a computer program. The computer program may be applied to the terminal device or the network device provided in the embodiments of this application, and the computer program causes a computer to execute the methods performed by the terminal device or the network device in various embodiments of this application.

It should be understood that, in embodiments of this application, "B that is corresponding to A" means that B is associated with A, and B may be determined based on A. However, it should be further understood that, determining B based on A does not mean determining B based only on A, but instead, B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device, first indication information, wherein the first indication information is used to activate or deactivate first discontinuous reception DRX, and the first DRX is DRX associated with a network device; and
determining, by the terminal device, an effective time of the first indication information based on a first parameter configured by the network device and/or timing advance TA of the terminal device.

2. The method according to claim 1, wherein the first parameter is a first timing offset associated with a non-terrestrial network NTN.

3. The method according to claim 1 or 2, wherein the effective time of the first indication information is determined based on a first uplink slot, and the first uplink slot is determined based on the first parameter and/or the TA.

4. The method according to claim 3, wherein the first uplink slot is determined based on a first downlink slot, and the first downlink slot is determined based on the first parameter and/or the TA.

5. The method according to claim 4, wherein the first downlink slot is determined based on a difference between a second parameter and the TA, and the second parameter is determined based on the first parameter.

6. The method according to claim 4 or 5, wherein the first downlink slot is further determined based on one or more of following:
a second downlink slot, wherein the second downlink slot is a slot in which the terminal device receives the first indication information; or
first duration, wherein the first duration is used to indicate a period of time required by the terminal device to process the first indication information.

7. The method according to claim 6, wherein the first downlink slot meets: $N = n + D + M - TA ,$ wherein N denotes a slot number of the first downlink slot, n denotes a slot number of the second downlink slot, D denotes the first duration, M denotes a second parameter, and the second parameter is determined based on the first parameter.

8. The method according to any one of claims 4 to 7, wherein the first uplink slot is a 1^{st} uplink slot whose starting time is not earlier than a starting time of the first downlink slot.

9. The method according to claim 3, wherein the first uplink slot is further determined based on a second uplink slot, and the second uplink slot is determined based on one or more of following:
a second downlink slot, wherein the second downlink slot is a slot in which the terminal device receives the first indication information; or
first duration, wherein the first duration is used to indicate a period of time required by the terminal device to process the first indication information.

10. The method according to claim 9, wherein the second uplink slot is a 1^{st} uplink slot whose starting time is not earlier than a starting time of a target slot, and the target slot is determined based on the second downlink slot and the first duration.

11. The method according to claim 10, wherein the target slot is a slot corresponding to a sum of the second downlink slot and the first duration.

12. The method according to any one of claims 9 to 11, wherein the first uplink slot meets: $X = X 1 + M ,$ wherein X denotes a slot number of the first uplink slot, X1 denotes a slot number of the second uplink slot, M denotes a second parameter, and the second parameter is determined based on the first parameter.

13. The method according to claim 5, 7, or 12, wherein the second parameter is the first parameter.

14. The method according to any one of claims 3 to 13, wherein the effective time of the first indication information is the first uplink slot.

15. The method according to any one of claims 1 to 14, wherein the first DRX comprises one or more of following:
cell DRX; or
beam DRX.

16. The method according to any one of claims 1 to 15, wherein a start time of a first timer associated with the first DRX is determined based on uplink timing information.

17. The method according to claim 16, wherein the uplink timing information comprises an uplink system frame number and/or an uplink subframe number.

18. The method according to claim 17, wherein the start time of the first timer is further determined based on one or more of following:
a cycle of the first DRX;
an offset of a starting time of the first DRX; or
a slot offset of the first DRX.

19. The method according to any one of claims 16 to 18, wherein the first timer is an on-duration timer of the first DRX.

20. A wireless communication method, comprising:
transmitting, by a network device, first indication information to a terminal device, wherein the first indication information is used to activate or deactivate first discontinuous reception DRX, and the first DRX is DRX associated with the network device,
wherein an effective time of the first indication information is determined based on a first parameter configured by the network device.

21. The method according to claim 20, wherein the first parameter is a first timing offset associated with a non-terrestrial network NTN.

22. The method according to claim 20 or 21, wherein the effective time of the first indication information is determined based on a first uplink slot, and the first uplink slot is determined based on the first parameter.

23. The method according to claim 22, wherein the first uplink slot is determined based on a first downlink slot, and the first downlink slot is determined based on the first parameter.

24. The method according to claim 23, wherein the first downlink slot is further determined based on one or more of following:
a second downlink slot, wherein the second downlink slot is a slot in which the network device transmits the first indication information; or
first duration, wherein the first duration is used to indicate a period of time required by the terminal device to process the first indication information.

25. The method according to claim 24, wherein the first downlink slot meets: $N = n + D + M ,$ wherein N denotes a slot number of the first downlink slot, n denotes a slot number of the second downlink slot, D denotes the first duration, M denotes a second parameter, and the second parameter is determined based on the first parameter.

26. The method according to any one of claims 23 to 25, wherein the first uplink slot is a 1^{st} uplink slot whose starting time is not earlier than a starting time of the first downlink slot.

27. The method according to claim 22, wherein the first uplink slot is further determined based on a second uplink slot, and the second uplink slot is determined based on one or more of following:
a second downlink slot, wherein the second downlink slot is a slot in which the network device transmits the first indication information; or
first duration, wherein the first duration is used to indicate a period of time required by the terminal device to process the first indication information.

28. The method according to claim 27, wherein the second uplink slot is a 1^{st} uplink slot whose starting time is not earlier than a starting time of a target slot, and the target slot is determined based on the second downlink slot and the first duration.

29. The method according to claim 28, wherein the target slot is a slot corresponding to a sum of the second downlink slot and the first duration.

30. The method according to any one of claims 27 to 29, wherein the first uplink slot meets: $X = X 1 + M ,$ wherein X denotes a slot number of the first uplink slot, X1 denotes a slot number of the second uplink slot, M denotes a second parameter, and the second parameter is determined based on the first parameter.

31. The method according to claim 25 or 30, wherein the second parameter is the first parameter.

32. The method according to any one of claims 22 to 31, wherein the effective time of the first indication information is the first uplink slot.

33. The method according to any one of claims 20 to 32, wherein the first DRX comprises one or more of following:
cell DRX; or
beam DRX.

34. The method according to any one of claims 20 to 33, wherein a start time of a first timer associated with the first DRX is determined based on uplink timing information.

35. The method according to claim 34, wherein the uplink timing information comprises an uplink system frame number and/or an uplink subframe number.

36. The method according to claim 35, wherein the start time of the first timer is further determined based on one or more of following:
a cycle of the first DRX;
an offset of a starting time of the first DRX; or
a slot offset of the first DRX.

37. The method according to any one of claims 34 to 36, wherein the first timer is an on-duration timer of the first DRX.

38. A terminal device, comprising:
a communications module, configured to receive first indication information, wherein the first indication information is used to activate or deactivate first discontinuous reception DRX, and the first DRX is DRX associated with a network device; and
a determining module, configured to determine an effective time of the first indication information based on a first parameter configured by the network device and/or timing advance TA of the terminal device.

39. The terminal device according to claim 38, wherein the first parameter is a first timing offset associated with a non-terrestrial network NTN.

40. The terminal device according to claim 38 or 39, wherein the effective time of the first indication information is determined based on a first uplink slot, and the first uplink slot is determined based on the first parameter and/or the TA.

41. The terminal device according to claim 40, wherein the first uplink slot is determined based on a first downlink slot, and the first downlink slot is determined based on the first parameter and/or the TA.

42. The terminal device according to claim 41, wherein the first downlink slot is determined based on a difference between a second parameter and the TA, and the second parameter is determined based on the first parameter.

43. The terminal device according to claim 41 or 42, wherein the first downlink slot is further determined based on one or more of following:
a second downlink slot, wherein the second downlink slot is a slot in which the terminal device receives the first indication information; or
first duration, wherein the first duration is used to indicate a period of time required by the terminal device to process the first indication information.

44. The terminal device according to claim 43, wherein the first downlink slot meets: $N = n + D + M - TA ,$ wherein N denotes a slot number of the first downlink slot, n denotes a slot number of the second downlink slot, D denotes the first duration, M denotes a second parameter, and the second parameter is determined based on the first parameter.

45. The terminal device according to any one of claims 41 to 44, wherein the first uplink slot is a 1^{st} uplink slot whose starting time is not earlier than a starting time of the first downlink slot.

46. The terminal device according to claim 40, wherein the first uplink slot is further determined based on a second uplink slot, and the second uplink slot is determined based on one or more of following:
a second downlink slot, wherein the second downlink slot is a slot in which the terminal device receives the first indication information; or
first duration, wherein the first duration is used to indicate a period of time required by the terminal device to process the first indication information.

47. The terminal device according to claim 46, wherein the second uplink slot is a 1^{st} uplink slot whose starting time is not earlier than a starting time of a target slot, and the target slot is determined based on the second downlink slot and the first duration.

48. The terminal device according to claim 47, wherein the target slot is a slot corresponding to a sum of the second downlink slot and the first duration.

49. The terminal device according to any one of claims 46 to 48, wherein the first uplink slot meets: $X = X 1 + M ,$ wherein X denotes a slot number of the first uplink slot, X1 denotes a slot number of the second uplink slot, M denotes a second parameter, and the second parameter is determined based on the first parameter.

50. The terminal device according to claim 42, 44, or 49, wherein the second parameter is the first parameter.

51. The terminal device according to any one of claims 40 to 50, wherein the effective time of the first indication information is the first uplink slot.

52. The terminal device according to any one of claims 38 to 51, wherein the first DRX comprises one or more of following:
cell DRX; or
beam DRX.

53. The terminal device according to any one of claims 38 to 52, wherein a start time of a first timer associated with the first DRX is determined based on uplink timing information.

54. The terminal device according to claim 53, wherein the uplink timing information comprises an uplink system frame number and/or an uplink subframe number.

55. The terminal device according to claim 54, wherein the start time of the first timer is further determined based on one or more of following:
a cycle of the first DRX;
an offset of a starting time of the first DRX; or
a slot offset of the first DRX.

56. The terminal device according to any one of claims 53 to 55, wherein the first timer is an on-duration timer of the first DRX.

57. A network device, comprising:
a communications module, configured to transmit first indication information to a terminal device, wherein the first indication information is used to activate or deactivate first discontinuous reception DRX, and the first DRX is DRX associated with the network device,
wherein an effective time of the first indication information is determined based on a first parameter configured by the network device.

58. The network device according to claim 57, wherein the first parameter is a first timing offset associated with a non-terrestrial network NTN.

59. The network device according to claim 57 or 58, wherein the effective time of the first indication information is determined based on a first uplink slot, and the first uplink slot is determined based on the first parameter.

60. The network device according to claim 59, wherein the first uplink slot is determined based on a first downlink slot, and the first downlink slot is determined based on the first parameter.

61. The network device according to claim 60, wherein the first downlink slot is further determined based on one or more of following:
a second downlink slot, wherein the second downlink slot is a slot in which the network device transmits the first indication information; or
first duration, wherein the first duration is used to indicate a period of time required by the terminal device to process the first indication information.

62. The network device according to claim 61, wherein the first downlink slot meets: $N = n + D + M ,$ wherein N denotes a slot number of the first downlink slot, n denotes a slot number of the second downlink slot, D denotes the first duration, M denotes a second parameter, and the second parameter is determined based on the first parameter.

63. The network device according to any one of claims 60 to 62, wherein the first uplink slot is a 1^{st} uplink slot whose starting time is not earlier than a starting time of the first downlink slot.

64. The network device according to claim 59, wherein the first uplink slot is further determined based on a second uplink slot, and the second uplink slot is determined based on one or more of following:
a second downlink slot, wherein the second downlink slot is a slot in which the network device transmits the first indication information; or
first duration, wherein the first duration is used to indicate a period of time required by the terminal device to process the first indication information.

65. The network device according to claim 64, wherein the second uplink slot is a 1^{st} uplink slot whose starting time is not earlier than a starting time of a target slot, and the target slot is determined based on the second downlink slot and the first duration.

66. The network device according to claim 65, wherein the target slot is a slot corresponding to a sum of the second downlink slot and the first duration.

67. The network device according to any one of claims 64 to 66, wherein the first uplink slot meets: $X = X 1 + M ,$ wherein X denotes a slot number of the first uplink slot, X1 denotes a slot number of the second uplink slot, M denotes a second parameter, and the second parameter is determined based on the first parameter.

68. The network device according to claim 62 or 67, wherein the second parameter is the first parameter.

69. The network device according to any one of claims 59 to 68, wherein the effective time of the first indication information is the first uplink slot.

70. The network device according to any one of claims 57 to 69, wherein the first DRX comprises one or more of following:
cell DRX; or
beam DRX.

71. The network device according to any one of claims 57 to 70, wherein a start time of a first timer associated with the first DRX is determined based on uplink timing information.

72. The network device according to claim 71, wherein the uplink timing information comprises an uplink system frame number and/or an uplink subframe number.

73. The network device according to claim 72, wherein the start time of the first timer is further determined based on one or more of following:
a cycle of the first DRX;
an offset of a starting time of the first DRX; or
a slot offset of the first DRX.

74. The network device according to any one of claims 71 to 73, wherein the first timer is an on-duration timer of the first DRX.

75. A terminal device, comprising a memory and a processor, wherein the memory is configured to store a program, and the processor is configured to invoke the program in the memory, to cause the terminal device to execute the method according to any one of claims 1 to 19.

76. A network device, comprising a memory and a processor, wherein the memory is configured to store a program, and the processor is configured to invoke the program in the memory to cause the network device to execute the method according to any one of claims 20 to 37.

77. An apparatus, comprising a processor configured to invoke a program from a memory, to cause the apparatus to execute the method according to any one of claims 1 to 19 or any one of claims 20 to 37.

78. A chip, comprising a processor configured to invoke a program from a memory to cause a device on which the chip is installed to execute the method according to any one of claims 1 to 19 or any one of claims 20 to 37.

79. A computer-readable storage medium, wherein the computer-readable storage medium stores a program, and the program causes a computer to execute a method according to any one of claims 1 to 19 or any one of claims 20 to 37.

80. A computer program product, comprising a program, wherein the program causes a computer to execute the method according to any one of claims 1 to 19 or any one of claims 20 to 37.

81. A computer program, wherein the computer program causes a computer to execute a method according to any one of claims 1 to 19 or any one of claims 20 to 37.
